# EUROPÄISCHE PATENTSCHRIFT

(11) **EP 2 715 860 B1**
(45) Veröffentlichungstag und Bekanntmachung des Hinweises auf die Patenterteilung: **05.04.2017**
(21) Anmeldenummer: 12729890.9
(22) Anmeldetag: 14.05.2012
(51) Int. Cl.: H01M 10/42, H01M 10/44, H01M 10/48, B60L 11/18, H04Q 9/00, B60L 3/00

(54) **SICHERHEITSARCHITEKTUR, BATTERIE SOWIE EIN KRAFTFAHRZEUG MIT EINER ENTSPRECHENDEN BATTERIE**
SECURITY ARCHITECTURE, BATTERY AND MOTOR VEHICLE HAVING A CORRESPONDING BATTERY
ARCHITECTURE DE SÉCURITÉ, BATTERIE ET VÉHICULE AUTOMOBILE DOTÉ D'UNE BATTERIE CORRESPONDANTE

(30) Priorität: 31.05.2011 DE 102011076757
(43) Veröffentlichungstag der Anmeldung: 09.04.2014
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: STIMM, Frank, 70569 Stuttgart (DE); HEYL, Andreas, 71640 Ludwigsburg (DE)
(74) Vertreter: Bee, Joachim
(86) Internationale Anmeldenummer: PCT/EP2012/058850
(87) Internationale Veröffentlichungsnummer: WO 2012/163656

(56) Entgegenhaltungen:
- WO-A1-2010/074290
- DE-A1-102009 003 048
- GB-A- 2 463 145
- US-A1- 2005 052 221
- US-A1- 2007 170 889

## Beschreibung

Die vorliegende Erfindung betrifft eine Sicherheitsarchitektur, eine Batterie sowie ein Kraftfahrzeug mit einer entsprechenden Batterie, welche insbesondere einsetzbar sind, um Batteriepacks eines geringeren Sicherheitsintegritätslevels zu einem Batteriesystem mit einem höheren Sicherheitsintegritätslevel zu kombinieren.

### Stand der Technik

Für die Energieversorgung von elektrischen Antrieben in Elektro- und Hybridfahrzeugen werden häufig Hochvolt-Lithium-Ionen-Batterien eingesetzt. Diese Batterien weisen durch ihre Chemie ein Gefährdungspotential auf. So kann es beispielsweise bei einer Überschreitung von Betriebsgrenzen zu einem Batteriebrand oder zum Austritt von gefährlichen chemischen Substanzen kommen.

Sicherheitsrelevante Betriebsgrenzen sind beispielsweise:
- obere Schwelle für die Ladung (Spannung) einer Batteriezelle,
- untere Schwelle für die Ladung (Spannung) einer Batteriezelle,
- obere Schwelle für die Temperatur einer Batteriezelle,
- obere Schwelle für den Ladestrom einer Batterie (temperaturabhängig).

Die Ladung und die Entladung einer Batterie werden durch ein Batteriemanagementsystem (BMS) so geregelt, dass die Sicherheit unter gegebenen Anforderungen gewährleistet wird. Hierfür müssen die Sensorik, die Logik und die Aktuatorik entsprechend den Sicherheitsanforderungen bzw. dem Sicherheitsintegritätslevel (ASIL [= Automotive Safety Integrity Level] der ISO 26262) ausgelegt sein. Eine Überschreitung der Betriebsgrenzen wird üblicherweise durch Überwachungsfunktionen z. B. in der zentralen Logik überwacht.

Für Hybridfahrzeuge werden häufig nur kleinere Batterien benötigt. Aufgrund des geringeren Energieinhalts müssen diese unter Umständen nur einem geringen ASIL B genügen.

Batterien für Elektrofahrzeuge müssen hingegen aufgrund ihres höheren Gefährdungspotentials einem höheren ASIL C oder D genügen. Das hat oft große Auswirkungen auf die Softwareprozesse und die Hardwarestruktur. Das ist insbesondere deshalb nachteilig, weil aus diesem Grunde herkömmlicherweise in Abhängigkeit der Sicherheitsanforderungen verschiedene Batteriesysteme eingesetzt werden mussten.

Beispielsweise wird in der US 2007/170889 A1 eine Sicherheitsarchitektur für mindestens zwei Batterien offenbart. Dabei umfasst jede Batterie jeweils mindestens eine elektrochemische Zelle, wobei die mindestens zwei Batterien jeweils mit mindestens einer Datenverarbeitungseinheit zu jeweils einem Modul kombiniert sind. Dabei ist die Sicherheitsarchitektur derart eingerichtet, dass durch die mindestens eine Datenverarbeitungseinheit mindestens eines ersten Moduls Eingangssignale mindestens eines zweiten Moduls verarbeitet werden.

### Offenbarung der Erfindung

Erfindungsgemäß ist daher eine Sicherheitsarchitektur für mindestens zwei Batterien vorgesehen, wobei es die Sicherheitsarchitektur ermöglicht, zwischen einem ASIL-B-Modus und einem ASIL-C- bzw. -D-Modus umzuschalten. Die Batterien umfassen jeweils zumindest eine elektro-chemische Zelle. Darüber hinaus ist zumindest ein Teil der Batterien mit mindestens einer Datenverarbeitungseinheit, z. B. einer Logik, kombiniert. Die mindestens eine Datenverarbeitungseinheit und die mit ihr kombinierte Batterie bilden ein Modul. Die Datenverarbeitungseinheit ist vorzugsweise Teil eines BMS.

Erfindungsgemäß ist die Sicherheitsarchitektur derart eingerichtet, dass durch die mindestens eine Datenverarbeitungseinheit mindestens eines ersten Moduls Eingangssignale mindestens eines zweiten Moduls verarbeitet werden. Ein besonderer Vorteil einer solchen Sicherheitsarchitektur besteht darin, dass die Eingangssignale redundant überwacht werden können, selbst wenn die einzelnen Module lediglich einer geringen Sicherheitsanforderung, wie z. B. ASIL B, genügen. Vorzugsweise lässt sich in einem Batteriesystem mit mindestens zwei Modulen zwischen verschiedenen Sicherheitsanforderungen umschalten.

Als vorteilhaft erweist es sich, wenn die Eingangssignale des mindestens einen zweiten Moduls dem mindestens einen ersten Modul über einen Bus von einem Sensor des mindestens einen zweiten Moduls oder über eine CAN-Verbindung (CAN = Controlle Area Network) zwischen dem mindestens einen ersten und zweiten Modul bereitgestellt werden.

In einer bevorzugten Ausführungsform der Erfindung ist vorgesehen, dass ein Abschaltpfad, insbesondere eine Aktuatorik, eines Moduls durch Ausgangssignale eines anderen Moduls aktivierbar ist. Dadurch wird vorteilhafterweise erreicht, dass die Aktuatorik ausreichend redundant ausgelegt ist.

In einer anderen bevorzugten Ausführungsform der Erfindung ist vorgesehen, dass eine Auswertung der Eingangssignale durch redundante Datenverarbeitungseinheiten erfolgt. Ein besonderer Vorteil dieser Ausführungsform besteht darin, dass ein hoher ASIL bezüglich Sicherheitsfunktionen, beispielsweise bei der Überwachung von Schwellwerten, gewährleistet wird.

Eine weitere bevorzugte Ausführungsform sieht vor, dass die Sicherheitsarchitektur derart eingerichtet ist, dass ein Modul Eingangssignale aller anderen Module erhält und diese redundant auswertet. Mit dieser Ausgestaltung wird vorteilhafterweise erreicht, dass die Sicherheitsarchitektur als Master-Slave-Architektur aufgebaut ist. Hierbei erweist es sich als vorteilhaft, wenn ein Modul als Master-Modul eingesetzt wird. Das Master-Modul empfängt in einer bevorzugten Ausführungsform die Sensorsignale aller anderen Module (Slave-Module). Der besondere Vorteil einer Master-Slave-Architektur besteht insbesondere darin, dass eine Auswertung der Eingangssignale durch redundante Datenverarbeitungseinheiten erfolgt.

Noch eine andere bevorzugte Ausführungsform sieht vor, dass bei der Übertragung der Eingangssignale von dem mindestens einen zweiten Modul zu dem mindestens einen ersten Modul die Datenverarbeitungseinheit des mindestens einen zweiten Moduls als "Gateway" wirkt. Als vorteilhaft erweist es sich, wenn durch geeignete Maßnahmen sichergestellt wird, dass die Eingangssignale nicht oder nicht unerkannt manipuliert werden können.

Als vorteilhaft erweist es sich auch, wenn zur Plausibilisierung eines Stromwerts eines ersten Moduls ein Stromwert des Stromsensors mindestens eines zweiten Moduls als Redundanzwert dient. Dadurch ist es auch bei höherer Sicherheitsanforderung nicht erforderlich, die Module mit mehreren Stromsensoren auszustatten, um die vorgeschriebene Redundanz zu erreichen. Bei geringer Sicherheitsanforderung wird vorzugsweise der Stromsensor einzeln plausibilisiert, bei höherer Sicherheitsanforderung dient ein Stromwert des mindestens einen zweiten Moduls als Redundanzwert.

Eine weitere bevorzugte Ausführungsform sieht vor, dass die Sicherheitsarchitektur derart eingerichtet ist, dass von dem mindestens einen zweiten Modul Minimal- und/oder Maximalwerte von Sensoren als Plausibilitätswerte übertragen werden. Vorzugsweise wird das durch einen zusätzlichen Logikbaustein in der Sensorlogik des mindestens einen zweiten Moduls umgesetzt. Die Minimal- und/oder Maximalwerte werden in dieser Ausführungsform als Plausibilitätswerte ausgewertet.

In noch einer anderen bevorzugten Ausführungsform ist vorgesehen, dass zumindest ein Teil der Sensoren in zumindest einem Teil der Module redundant vorhanden ist und ein Signalweg eines Sensors durch ein erstes Modul und ein Signalweg eines redundant vorhandenen Sensors durch ein zweites Modul ausgewertet wird. Als vorteilhaft erweist es sich hierbei, dass die Signale der in einem ersten Modul redundant vorhandenen Sensoren durch zwei verschiedene Module ausgewertet werden.

Eine andere bevorzugte Ausführungsform sieht vor, dass jedes Modul genau eine Aktuatorik umfasst und die Redundanz der Aktuatorik dadurch erreicht wird, dass die Aktuatorik des mindestens einen zweiten Moduls durch Ausgangssignale des mindestens einen ersten Moduls ansteuerbar ist. Dies ist insbesondere deshalb von Vorteil, da durch die Kombination der Aktuatoriken der mindestens einen ersten und zweiten Module die erforderliche Redundanz erreicht wird, ohne dass jedes einzelne Modul mit einer redundanten Aktuatorik ausgestattet sein muss.

Ein weiterer Aspekt der Erfindung betrifft eine Batterie, die mit einer Sicherheitsarchitektur kombiniert ist, wobei die Sicherheitsarchitektur derart eingerichtet ist, dass durch die mindestens eine Datenverarbeitungseinheit mindestens eines ersten Moduls Eingangssignale mindestens eines zweiten Moduls verarbeitet werden. Vorzugsweise handelt es sich bei der Batterie um eine Lithium-Ionen-Batterie oder die Batterie umfasst elektrochemische Zellen, die als Lithium-Ionen-Batteriezellen ausgebildet sind.

Ein anderer Aspekt der Erfindung betrifft ein Kraftfahrzeug mit einem elektrischen Antriebsmotor zum Antreiben des Kraftfahrzeugs und einer mit dem elektrischen Antriebsmotor verbundenen oder verbindbaren Batterie gemäß dem im voranstehenden Absatz beschriebenen Erfindungsaspekt. Die Batterie ist jedoch nicht auf einen solchen Einsatzzweck eingeschränkt, sondern kann auch in anderen elektrischen Systemen eingesetzt werden.

Durch die Erfindung wird eine Erweiterung der Sicherheitsarchitektur realisiert, bei der zwei oder mehr Batteriepacks, das heißt Batterien mit BMS, mit geringer Sicherheitsanforderung, wie etwa ASIL B, zu einem Batteriesystem mit höherer Sicherheitsanforderung, wie etwa ASIL C oder D, kombiniert werden. Das hat insbesondere den Vorteil, dass mit den gleichen Modulen Systeme mit verschiedenem ASIL aufgebaut werden können, ohne die Architektur der Grundmodule für jeden ASIL variieren zu müssen.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine Sicherheitskette für eine Batterie,
Figur 2 eine Veranschaulichung einer beispielhaften Kombination zweier ASIL-B-Module zu einem ASIL-C- bzw. ASIL-D-Modul,
Figur 3 eine Veranschaulichung einer beispielhaften Kombination zweier ASIL-B-Module mit redundanter Sensorik zu einem ASIL-C- bzw. ASIL-D-Modul, und
Figur 4 eine als Master-Slave-Architektur realisierte Sicherheitsarchitektur.

### Ausführungsformen der Erfindung

Nachfolgend soll die Erfindung anhand von Grundmodulen, die dem Sicherheitsintegritätslevel ASIL B genügen, in größerem Detail beschrieben werden. Das Ausführungsbeispiel beschreibt die Erfindung anhand einer beispielhaften Kombination 200 zweier ASIL-B-Module zu einem ASIL-C- bzw. ASIL-D-Modul. Dabei ist die Erfindung nicht auf diese spezielle Sicherheitsanforderung eingeschränkt.

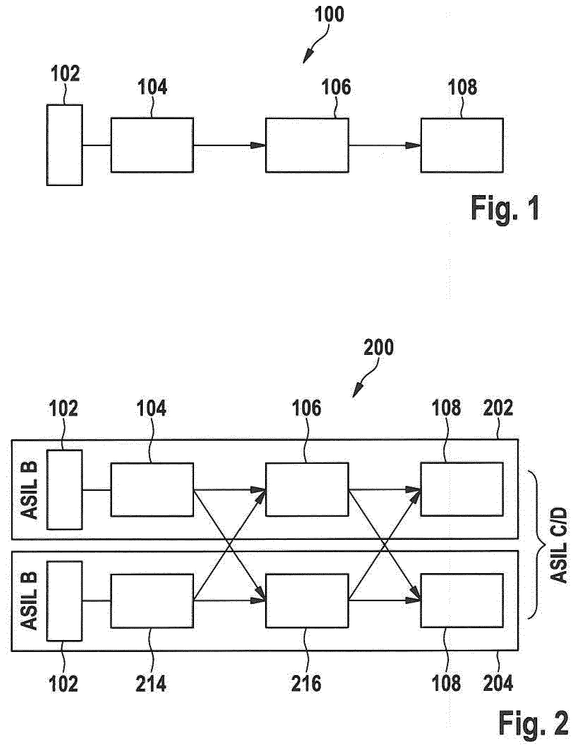

Im Folgenden wird vorausgesetzt, dass eine Sicherheitskette 100 mit Hard- und Software existiert, bestehend zumindest aus elektro-chemischen Zellen 102, mindestens einem Sensor 104, mindestens einer Logik 106 und mindestens einem Aktor 108, wobei die Sicherheitskette 100 ASIL B genügt (vgl. Figur 1).

### Software-Sicherheitsarchitektur

Die Software-Sicherheitsarchitektur der beispielhaften Ausführungsform ermöglicht es, zwischen dem ASIL-B-Modus und dem ASIL-C- bzw. -D-Modus umzuschalten. Im Falle des höheren ASIL-Modus müssen im ersten Grundmodul 202 zusätzlich die Eingangssignale des zweiten Grundmoduls 204 verarbeitet bzw. überwacht werden. Zudem ist es von Vorteil, wenn der Abschaltpfad des zweiten Grundmoduls 204 über dessen Aktuatorik über Ausgänge des ersten Grundmoduls 202 aktiviert werden kann.

### Hardware-Architektur

### Sensorik

In Figur 2 ist eine Veranschaulichung einer beispielhaften Kombination zweier ASIL-B-Module zu einem ASIL-C- bzw. ASIL-D-Modul wiedergegeben. Das erste Grundmodul 202 muss die Sensorsignale des zweiten Grundmoduls 204 einlesen können. Das kann entweder über einen zweiten Bus vom Sensor 214 des zweiten Grundmoduls 204 oder z. B. über die CAN-Verbindung zwischen beiden Grundmodulen 202, 204 erfolgen, wobei die Logik 216 des zweiten Grundmoduls 204 als "Gateway" fungiert. In einer bevorzugten Ausführungsform ist vorgesehen, dass durch zusätzliche Maßnahmen abgesichert wird, dass dieses "Gateway" die Signale nicht unerkannt verfälschen kann.

Für die Strommessung hat eine solche Kombination der beiden Grundmodule 202, 204 den Vorteil, dass ein Stromsensor pro Grundmodul 202, 204 ausreicht. Für ASIL B wird jeder Sensor 104, 214 einzeln plausibilisiert, für ASIL C oder ASIL D dient der Stromwert des zweiten Grundmoduls 204 als Redundanzwert.

Für die Spannungsmessung ist in einer beispielhaften Ausführungsform ebenfalls eine reduzierte Version vorgesehen, bei der nicht alle Zellspannungen vom ersten Grundmodul 202 an das zweite Grundmodul 204 übertragen werden, sondern z. B. über einen zusätzlichen Baustein in der Sensorlogik des zweiten Grundmoduls 204 nur die Minimal- und Maximalwerte der Spannungen (oder anderer Messwerte) übertragen werden. Diese werden dann anstelle einer vollständigen Redundanz als Plausibilitätswerte über die redundante Logik 106 des ersten Grundmoduls 202 überwacht.

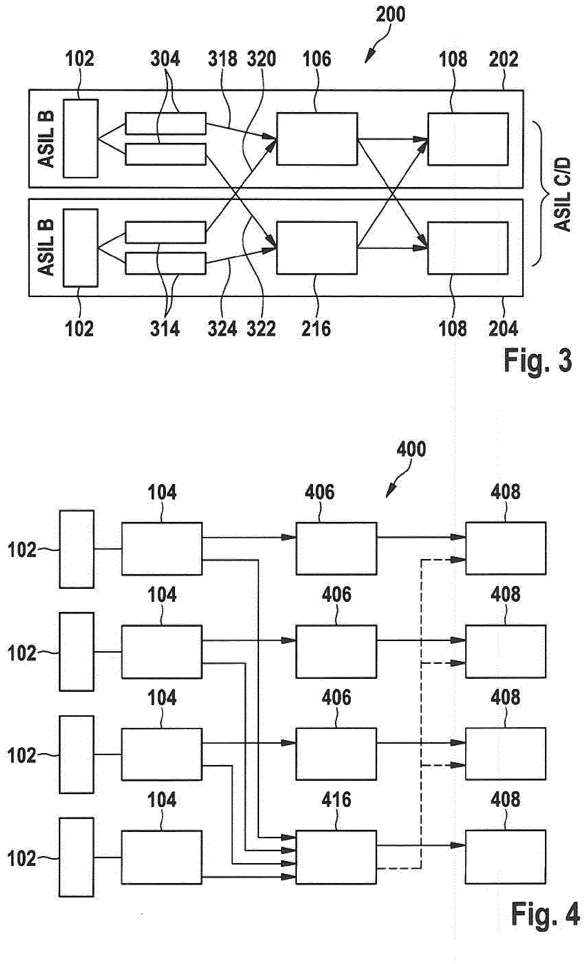

Für die Spannungs- und Temperaturmessung wäre auch eine erweiterte Version denkbar, bei der die Sensorik 304, 314 (CSC = Cell Supervisor Circuit) redundant vorhanden ist, wie in Figur 3 wiedergegeben. Bei dieser beispielhaften Ausführungsform wird je ein Signalweg 318, 320, 322, 324 von dem ersten Grundmodul 202 und dem zweiten Grundmodul 204 ausgewertet.

### Logik

Die Auswertung der Signale erfolgt über redundante Logiken 106, 216. Damit ist ein hoher ASIL bezüglich der Sicherheitsfunktionen, beispielsweise bei der Überwachung auf Überschreitungen von Schwellwerten, möglich.

Grundsätzlich ist dabei eine Master-Slave-Architektur 400 denkbar, bei der eine von n Logiken als Master 416 arbeitet, der die redundante Auswertung der Sensorsignale von zumindest einem Teil, vorzugsweise aber von allen anderen Slaves 406 durchführt (vgl. Figur 4). Zumindest bei der als Master 416 arbeitenden Logik kann es sich um ein Steuergerät handeln.

Bei dieser beispielhaften Ausführungsform erfolgt eine Abschaltung direkt über ein oder mehrere Aktoren 408 oder zusätzlich über eine Abschaltanforderung an die Slaves 406 über einen verbindenden Kommunikationsbus.

### Aktuatorik

Für die Gewährleistung eines hohen ASIL bei der Aktuatorik (Abschaltung über Hauptschütze) muss diese ausreichend redundant ausgelegt sein und/oder deren Funktionalität über Diagnosen abgesichert werden. Das kann z. B. mittels eines Abschaltpfadtests realisiert werden, wie bei EGAS-Systemen (EGAS = Elektronisches Gaspedal).

Wenn die Abschaltung aus dem ersten Grundmodul 202 auch die Aktuatorik (Hauptschütze) des zweiten Grundmoduls 204 ansteuern kann, ist in einer bevorzugten Ausführungsform vorgesehen, dass je nach Ausfallrate der Aktuatorik diese je Grundmodul 202, 204 auf ein Hauptschütz reduziert wird. Für ASIL B kann ein Hauptschütz ausreichend sein, was zu einer Kostenreduktion führen würde. Für ASIL C und D wären dann jedoch bei Kombination zweier Grundmodule 202, 204 zwei Hauptschütze verfügbar, womit eine Redundanz sichergestellt wird.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Sicherheitsarchitektur, der erfindungsgemäßen Batterie und dem erfindungsgemäßen Kraftfahrzeug auch bei grundsätzlich anders gearteten Ausführungen Gebrauch macht.

## Patentansprüche

1. Sicherheitsarchitektur für mindestens zwei Batterien, wobei jede Batterie jeweils mindestens eine elektro-chemische Zelle (102) umfasst, und wobei die mindestens zwei Batterien jeweils mit mindestens einer Datenverarbeitungseinheit zu jeweils einem Modul (202, 204) kombiniert sind, wobei die Sicherheitsarchitektur derart eingerichtet ist, dass durch die mindestens eine Datenverarbeitungseinheit mindestens eines ersten Moduls (202, 204) Eingangssignale mindestens eines zweiten Moduls (204, 202) verarbeitet werden, wobei ein Abschaltpfad des mindestens einen zweiten Moduls (204, 202) durch Ausgangssignale des mindestens einen ersten Moduls (202, 204) aktivierbar ist.

2. Sicherheitsarchitektur nach Anspruch 1, wobei die Sicherheitsarchitektur derart eingerichtet ist, dass die Eingangssignale von mindestens einem Sensor (104, 214, 304, 314) des mindestens einen zweiten Moduls geliefert werden, und das mindestens eine erste Modul über einen Bus mit dem mindestens einen Sensor (104, 214, 304, 314) verbunden ist.

3. Sicherheitsarchitektur nach einem der voranstehenden Ansprüche, wobei die Sicherheitsarchitektur derart eingerichtet ist, dass eine Auswertung der Eingangssignale durch redundante Datenverarbeitungseinheiten erfolgt.

4. Sicherheitsarchitektur nach Anspruch 3, wobei die Sicherheitsarchitektur derart eingerichtet ist, dass ein Modul Eingangssignale aller anderen Module erhält und diese redundant auswertet.

5. Sicherheitsarchitektur nach einem der voranstehenden Ansprüche, wobei jedes Modul genau einen Stromsensor aufweist und jeder Stromsensor einzeln plausibilisiert wird oder zur Plausibilisierung eines Stromwerts eines ersten Moduls ein Stromwert des Stromsensors mindestens eines zweiten Moduls als Redundanzwert dient.

6. Sicherheitsarchitektur nach einem der voranstehenden Ansprüche, wobei zumindest ein Teil der Sensoren (304, 314) in zumindest einem Teil der Module redundant vorhanden ist und ein Signalweg. (318, 324) eines Sensors (304, 314) durch ein erstes Modul und ein Signalweg (320, 322) eines redundant vorhandenen Sensors (304, 314) durch ein zweites Modul ausgewertet wird.

7. Sicherheitsarchitektur nach einem der Ansprüche 1 bis 6, wobei jedes Modul genau eine Aktuatorik umfasst und die Redundanz der Aktuatorik dadurch erreicht wird, dass die Aktuatorik des mindestens einen zweiten Moduls durch Ausgangssignale des mindestens einen ersten Moduls ansteuerbar ist.

8. Batterie, die mit einer Sicherheitsarchitektur gemäß einem der Ansprüche 1 bis 7 kombiniert ist.

9. Kraftfahrzeug mit einem elektrischen Antriebsmotor zum Antreiben des Kraftfahrzeugs und einer mit dem elektrischen Antriebsmotor verbundenen Batterie gemäß Anspruch 8.

## Claims

1. Safety architecture for at least two batteries, wherein each battery comprises at least one respective electrochemical cell (102), and wherein the at least two batteries are each combined with at least one data processing unit to form a respective module (202, 204), wherein the safety architecture is set up such that the at least one data processing unit of at least one first module (202, 204) processes input signals for at least one second module (204, 202), wherein a shutdown path for the at least one second module (204, 202) can be activated by output signals from the at least one first module (202, 204).

2. Safety architecture according to Claim 1, wherein the safety architecture is set up such that the input signals are delivered by at least one sensor (104, 214, 304, 314) of the at least one second module, and the at least one first module is connected to the at least one sensor (104, 214, 304, 314) by means of a bus.

3. Safety architecture according to either of the preceding claims, wherein the safety architecture is set up such that the input signals are evaluated by redundant data processing units.

4. Safety architecture according to Claim 3, wherein the safety architecture is set up such that one module receives input signals from all other modules and evaluates them on a redundant basis.

5. Safety architecture according to one of the preceding claims, wherein each module has precisely one current sensor and each current sensor is individually plausibilized or a current value from a first module is plausibilized by using a current value from the current sensor of at least one second module as a redundancy value.

6. Safety architecture according to one of the preceding claims, wherein at least some of the sensors (304, 314) in at least some of the modules exist on a redundant basis and a signal path (318, 324) for a sensor (304, 314) is evaluated by a first module and a signal path (320, 322) for a redundantly existent sensor (304, 314) is evaluated by a second module.

7. Safety architecture according to one of Claims 1 to 6, wherein each module comprises precisely one actuator means, and the redundancy of the actuator means is achieved by virtue of the actuator means of the at least one second module being able to be controlled by output signals from the at least one first module.

8. Battery that is combined with the safety architecture according to one of Claims 1 to 7.

9. Motor vehicle having an electric drive motor for driving the motor vehicle and a battery according to Claim 8 that is connected to the electric drive motor.

## Revendications

1. Architecture de sécurité pour au moins deux batteries, chaque batterie comprenant respectivement au moins une cellule électrochimique (102), et les au moins deux batteries étant respectivement combinées avec au moins une unité de traitement de données respectivement en un module (202, 204), l'architecture de sécurité étant conçue de telle sorte que les signaux d'entrées d'au moins un deuxième module (204, 202) sont traités par l'au moins une unité de traitement de données d'au moins un premier module (202, 204), un trajet de déconnexion de l'au moins un deuxième module (204, 202) pouvant être activé par des signaux de sortie de l'au moins un premier module (202, 204).

2. Architecture de sécurité selon la revendication 1, l'architecture de sécurité étant conçue de telle sorte que les signaux d'entrée d'au moins un capteur (104, 214, 304, 314) de l'au moins un deuxième module sont délivrés et l'au moins un premier module est relié à l'au moins un capteur (104, 214, 304, 314) par le biais d'un bus.

3. Architecture de sécurité selon l'une des revendications précédentes, l'architecture de sécurité étant conçue de telle sorte qu'une interprétation des signaux d'entrée est effectuée par des unités de traitement de données redondantes.

4. Architecture de sécurité selon la revendication 3, l'architecture de sécurité étant conçue de telle sorte qu'un module reçoit les signaux d'entrée de tous les autres modules et les interprète de manière redondante.

5. Architecture de sécurité selon l'une des revendications précédentes, chaque module possédant exactement un capteur de courant et chaque capteur de courant étant soumis individuellement à un contrôle de plausibilité ou alors une valeur de courant du capteur de courant d'au moins un deuxième module servant de valeur de redondance pour le contrôle de plausibilité d'une valeur de courant d'un premier module.

6. Architecture de sécurité selon l'une des revendications précédentes, au moins une partie des capteurs (304, 314) étant présente de manière redondante dans au moins une partie des modules et un chemin de signal (318, 324) d'un capteur (304, 314) à travers un premier module et un chemin de signal (320, 322) d'un capteur (304, 314) présent de manière redondante à travers un deuxième module sont interprétés.

7. Architecture de sécurité selon l'une des revendications 1 à 6, chaque module comprenant exactement un système actionneur et la redondance du système actionneur est obtenue en ce que le système actionneur de l'au moins un deuxième module peut être commandé par des signaux de sortie de l'au moins un premier module.

8. Batterie qui est combinée avec une architecture de sécurité selon l'une des revendications 1 à 7.

9. Véhicule automobile équipé d'un moteur de propulsion électrique destiné à la propulsion du véhicule automobile et d'une batterie selon la revendication 8 reliée au moteur de propulsion électrique.
